# EUROPÄISCHE PATENTSCHRIFT

(11) **EP 1 356 235 B1**
(45) Veröffentlichungstag und Bekanntmachung des Hinweises auf die Patenterteilung: **22.11.2006**
(21) Anmeldenummer: 02715665.2
(22) Anmeldetag: 30.01.2002
(51) Int. Cl.: F23K 5/00, F02C 7/228, F02C 9/28

(54) **BRENNERANLAGE UND VERFAHREN ZU IHREM BETRIEB**
BURNER UNIT AND METHOD FOR OPERATION THEREOF
UNITE DE BRULEURS ET SON PROCEDE DE FONCTIONNEMENT

(30) Priorität: 30.01.2001 DE 10104150
(43) Veröffentlichungstag der Anmeldung: 29.10.2003
(73) Patentinhaber: Alstom Technology Ltd, 5400 Baden (CH)
(72) Erfinder: DORNBERGER, Rolf, CH-8212 Neuhausen am Rheinfall (CH); STOLL, Peter, 72119 Ammerbuch-Poltringen (DE); PASCHEREIT, Christian, Olivier, CH-5400 Baden (CH); SCHUERMANS, Bruno, CH-4057 Basel (CH); BÜCHE, Dirk, 79780 Stühlingen (DE); KOUMOUTSAKOS, Petros, CH-8001 Zürich (CH)
(86) Internationale Anmeldenummer: PCT/IB2002/000281
(87) Internationale Veröffentlichungsnummer: WO 2002/061337

(56) Entgegenhaltungen:
- EP-A- 0 969 192
- EP-A- 0 985 810
- EP-A- 1 067 338
- DE-A- 4 446 945
- DE-A- 19 518 634
- GB-A- 2 287 312
- US-A- 4 735 052
- US-A- 5 261 222

## Beschreibung

Die Erfindung betrifft ein Verfahren gemäss dem Oberbegriff des Anspruchs 1. Derartige Verfahren werden vor allem in Gasturbinen eingesetzt. Ein solcher Verfahren ist aus Dokument US-A-4 735 052 schon bekannt.

### Stand der Technik

Es ist bekannt, dass Brenneranlagen mit üblichen drallstabilisierten Vormischbrennern, bei welchen der Brennstoff mit gleichbleibender Verteilung über die Länge eingeleitet wird, in verschiedener Hinsicht problematische Eigenschaften aufweisen, die mit dem Ablauf der Verbrennung zu tun haben. Vor allem wenn eine solche Anlage ausserhalb des optimalen Arbeitsbereichs, z. B. mit Teillast betrieben wird, enthalten die Abgase oft einen beträchtlichen Anteil an Schadstoffen, insbesondere NOₓ. Auch tritt oft pulsierende Verbrennung auf, welche Druckwellen, die die Gasturbine hohen mechanischen Belastungen aussetzen und ihre Lebensdauer verringern, hervorrufen.

Zur Verminderung dieser Probleme ist vorgeschlagen worden, die Verbrennung durch Beeinflussung des Drucks in der Brenneranlage mittels Rückkopplung zu stabilisieren. Dazu wurde der Druck dort gemessen und das gemessene Signal phasenverschoben über Lautsprecher wieder eingespeist. Auf diese Weise konnte eine stabilere Verbrennung und dadurch eine Verringerung der Pulsationen und auch des NOₓ- und des CO-Ausstosses erreicht werden. S. dazu C. O. Paschereit, E. Gutmark, W. Weisenstein: 'Structure and Control of Thermoacaustic Instabilities in a Gas-turbine Combustor', Combust. Sci. and Tech. 138 (1998), S. 213-232. Der erforderliche Aufwand ist jedoch beträchtlich. Auch ist es nicht möglich, den Betrieb an besondere Anforderungen hinsichtlich der Eigenschaften der Verbrennung - z. B. besonders tiefen NOₓ-Ausstoss - gezielt anzupassen.

### Darstellung der Erfindung

Der Erfindung liegt die Aufgabe zu Grunde, die Verbrennung mit möglichst einfachen Mitteln zu stabilisieren und hinsichtlich bestimmter Eigenschaften der Verbrennung, insbesondere der Verminderung der Pulsationen und des Schadstoffausstosses, vor allem des NOₓ-Ausstosses möglichst günstige Ergebnisse zu erzielen. Es wurde gefunden, dass der Ablauf der Verbrennung stark von der Massenstromverteilung des in die Vormischbrenner eingeleiteten Brennstoffs beeinflusst wird.

Bei den erfindungsgemässen Verfahren ist die Verteilung des Massenstroms einstellbar. Sie kann daher so eingestellt werden, dass der Verbrennungsablauf jeweils auf bestimmte Anforderungen wie tiefen Schadstoffausstoss und geringe Pulsationen oder wechselnde Gewichtungen mehrerer solcher Anforderungen weitgehend optimal abgestimmt ist.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: schematisch einen Vormischbrenner mit einer vorgeschalteten Verteilvorrichtung,
- Fig. 2: schematisch einen Aufbau einer Versuchsanlage zur Ermittlung günstiger Massenstromverteilungen,
- Fig. 3: ein Schema einer Baumstruktur als vereinfachtes Modell für die Massenstromverteilung;
- Fig. 4, 5a,b: allgemein das bei der Ermittlung günstiger Massenstromverteilungen eingesetzte Optimierungsverfahren, wobei

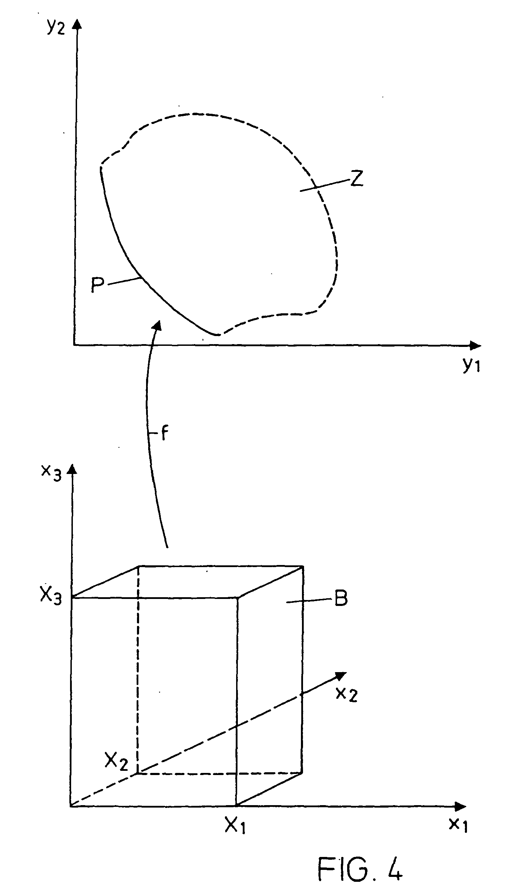

- Fig. 4: die Bestimmungsmenge eines typischen Optimierungsproblems und ihre Abbildung auf die entsprechende Zielmenge zeigt und

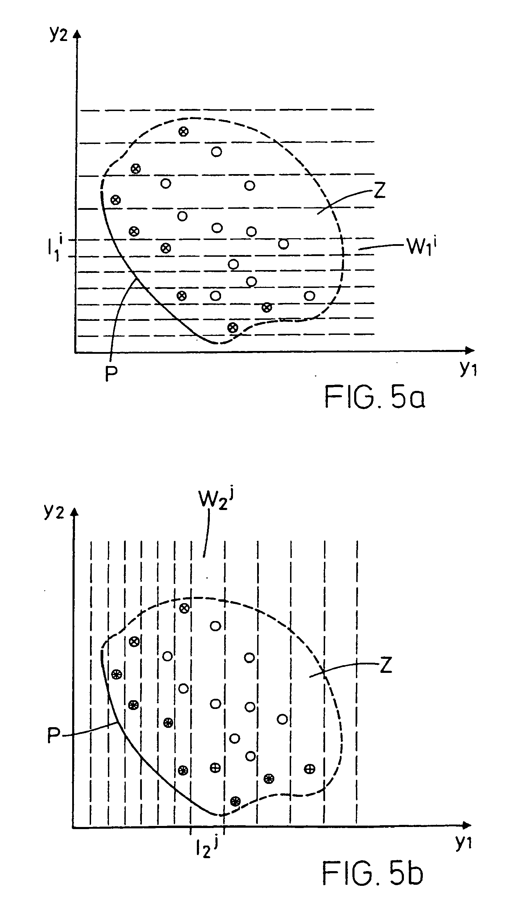

- Fig. 5a,b: Schritte bei der Auswahl neuer Bestimmungsgrössen aus vorher erzeugten Versuchsgrössen im Zielraum;

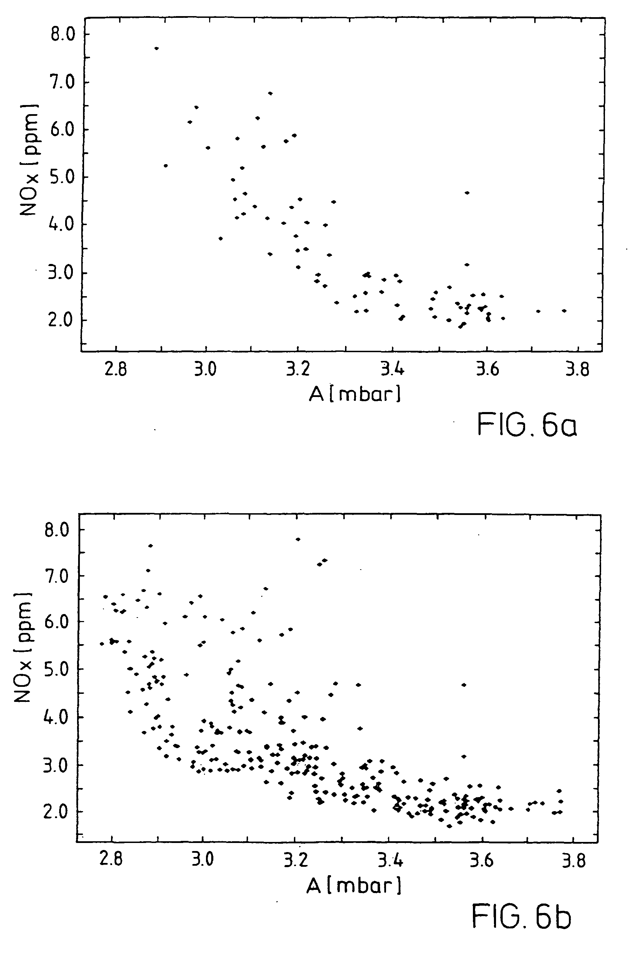

- Fig. 6a,b: den Zielraum des vorliegenden Optimierungsproblems nach 20 bzw. 64 Iterationsschritten,

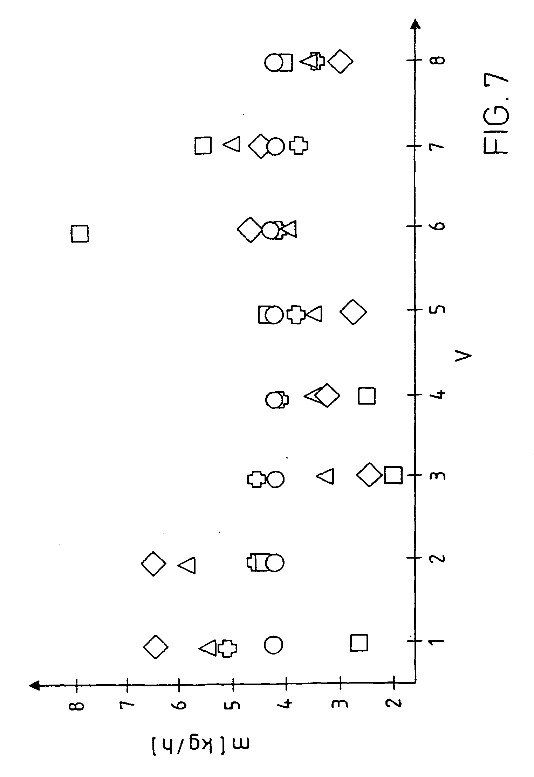

- Fig. 7: Massenstromverteilungen gemäss ausgewählten Lösungen des Optimierungsproblems.

### Wege zur Ausführung der Erfindung

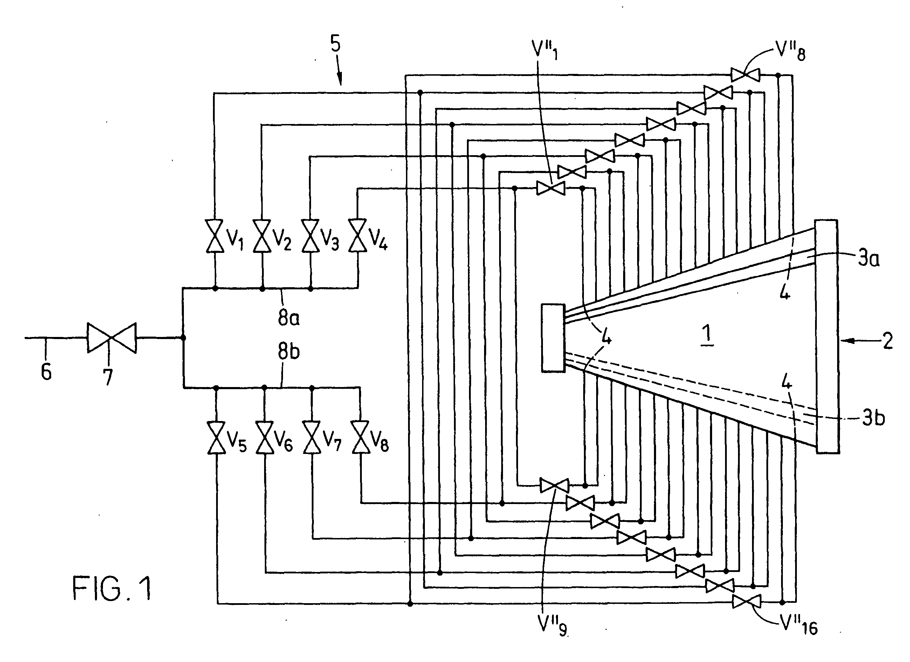

Ein Vormischbrenner 1 (Fig. 1) grundsätzlich bekannten Aufbaus, wie er in einer Brennkammer einer Gasturbine eingesetzt wird, weist die Form eines Kegelstumpfs mit an seinem weiten Ende einer Ausströmöffnung 2 auf. Längs zweier diametral gegenüberliegender Mantellinien sind Lufteinlassschlitze 3a,b vorgesehen, an deren Aussenseiten jeweils sechzehn Eintrittsöffnungen 4 für die Brennstoffzufuhr angeordnet sind, welche die brennerseitigen Endpunkte einer als Rohrleitungs- und Ventilsystem ausgebildeten Verteilvorrichtung 5 bilden.

In Fig. 1 ist beispielshalber eine verhältnismässig komplex ausgebildete Verteilvorrichtung 5 dargestellt. Ihr Eingang wird von einer Zuleitung 6 gebildet, die an eine Brennstoffquelle, z. B. eine stationäre Gasleitung (nicht dargestellt) angeschlossen und mit einem Eingangsventil 7 versehen ist, mittels dessen die Brennstoffzufuhr sicherheitshalber begrenzt wird. Anschliessend verzweigt sich die Hauptleitung 6 in zwei Zweigleitungen 8a,b, von welchen jeweils vier Zufuhrleitungen abzweigen, in denen jeweils ein Regelventil liegt. Die Regelventile sind mit V₁ bis V₈ bezeichnet. Anschliessend an das jeweilige Regelventil verzweigt sich die Zufuhrleitung zu zwei Paaren von einander gegenüberliegenden Eintrittsöffnungen 4 und zwar derart, dass axial aufeinanderfolgende Vierergruppen von Eintrittsöffnungen jeweils über eines der Regelventile V₁,...,V₈ mit Brennstoff beaufschlagt werden. Den beiden auf der gleichen Seite angeordneten Eintrittsöffnungen 4 ist jeweils ein An/Aus-Ventil vorgeordnet. Mittels der An/Aus-Ventile V"₁,...,V"₁₆ kann jeweils die Brennstoffzufuhr zu zwei aufeinanderfolgenden Eintrittsöffnungen 4 gezielt gesperrt werden.

Die Regelventile V₁,...,V₈ sind so ausgebildet, dass mit ihnen bestimmte Massenströme m₁,...,m₈ eingestellt werden können. Die Verteilung des Brennstoff-Massenstroms auf die Eintrittsöffnungen ist in der Regel so eingestellt, dass bezüglich bestimmter Anforderungen besonders günstige Werte erzielt werden. Insbesondere kann die Massenstromverteilung so eingestellt sein, dass der NOₓ-Gehalt der Abgase der Gasturbine tief ist und zugleich die Amplituden von Pulsationen, wie sie bei ungleichmässiger Verbrennung entstehen, klein sind. Die Massenstromverteilung kann dabei einer Pareto-Lösung hinsichtlich einer aus diesen beiden Komponenten bestehenden oder auch einer anderen Zielgrösse entsprechen, wie weiter unten näher erläutert wird.

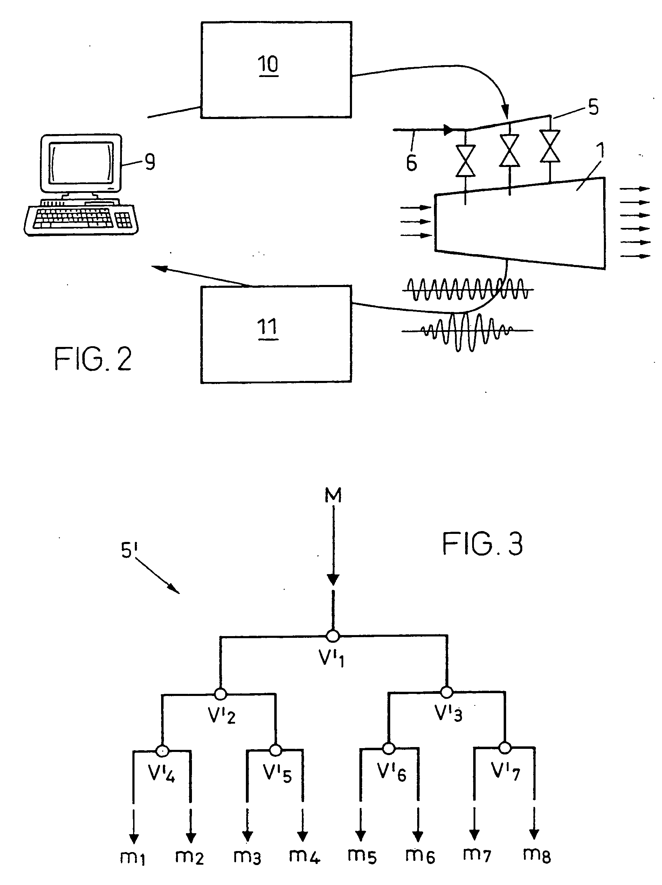

Der Aufbau der Verteilvorrichtung 5 kann vom Beschriebenen in vieler Hinsicht abweichen. So kann jedem Regelventil eine grössere oder kleinere Gruppe von Eintrittsöffnungen oder auch nur eine einzige Eintrittsöffnung zugeordnet sein. Die An/Aus-Ventile können an anderer Stelle eingesetzt sein oder auch entfallen oder es können ausschliesslich solche Ventile eingesetzt werden, z. B. eines für jede Eintrittsöffnung. Auch die Topologie kann anders sein, z. B., wie bei der in Fig. 3 dargestellten Verteilvorrichtung 5', einer Baumstruktur aus Dreiwegventilen entsprechen, wie sie weiter unten näher beschrieben wird.

Mittels einer Versuchsanordnung werden Massenstromverteilungen ermittelt, die hinsichtlich einer Zielgrösse, deren Komponenten von bestimmten Eigenschaften, insbesondere dem Ausstoss von NOₓ und dem Maximum der Amplituden auftretender Pulsationen, gebildet werden, möglichst günstig sind. Die Versuchsanordnung (Fig. 2), in welcher eine Verteilvorrichtung 5 einem wie im Zusammenhang mit Fig. 1 beschrieben ausgebildeten Vormischbrenner 1 vorgeschaltet ist, umfasst eine Datenverarbeitungsanlage 9. Die nicht im einzelnen dargestellte Verteilvorrichtung 5 ist beispielsweise wie in Fig. 1 beschrieben aufgebaut, aber ohne die An/Aus-Ventile. Die Regelventile V₁,...,V₈ werden nach von der Datenverarbeitungsanlage 9 ausgegebenen Werten von einer Steuereinheit 10 eingestellt. Eine Messeinheit 11 liefert die bei der Verbrennung gemessenen Eigenschaften an die Datenverarbeitungsanlage 9. Der Versuchsaufbau kann auch mehrere Vormischbrenner und Verteilvorrichtungen oder eine ganze Brenneranlage umfassen. Dies ist eine Frage des Aufwands, der in Kauf genommen werden soll. Es hat sich jedoch gezeigt, dass an einem einzelnen Vormischbrenner ermittelte Massenstromverteilungen in einer vollständigen Brenneranlage in der Regel entsprechende Eigenschaften nach sich ziehen.

Bei der dargestellten Versuchsanordnung wird dem Vormischbrenner 1 jeweils ein bestimmter Gesamtmassenstrom M zugeführt. Für die Darstellung der Massenstromverteilung in der Datenverarbeitungsanlage 9 wird dabei ein Modell benutzt, bei welchem die Verteilvorrichtung 5 auf eine der Verteilvorrichtung 5' (Fig. 3) entsprechende abgebildet ist, d. h. durch eine binäre Baumstruktur aus Dreiwegventilen V'₁,...,V'₇ dargestellt ist. Die Stellung jedes der Dreiwegventile kann dort durch einen Verteilparameter p, 0≤p≤1 dargestellt werden, der dem auf den linken Ausgang fallenden Anteil bei der Verteilung des Massenstroms zwischen dem linken und dem rechten Ausgang entspricht. Werden die einzelnen Massenströme an den Ausgängen der Regelventile V₁,...,V₈ mit m₁,...,m₈ bezeichnet, so ergibt sich der Verteilparameter des Ventils V'₁ zu p₁=(m₁+...+m₄)/M, der des Ventils V'₂ zu p₂=(m₁+m₂)/(m₁+...+m₄) etc. und umgekehrt kann man aus den Verteilparametern p₁,...,p₇ leicht m₁,...,m₈ berechnen gemäss m₁=Mp₁p₂p₄, M₂=Mp₁p₂(1-p₄) usw.. Dadurch, dass die Datenverarbeitungsanlage 9 mit dem beschriebenen Modell arbeitet, werden nur sieben Parameter benötigt und damit die Dimension des Bestimmungsraumes (s. unten) um 1 erniedrigt.

Wird wie im vorliegenden Fall hinsichtlich mehrerer unabhängiger Eigenschaften optimiert, so ist es im allgemeinen nicht möglich, eine bestimmte optimale Lösung auszuwählen, doch kann eine Menge sogenannter Pareto-optimaler Lösungen aufgefunden werden, die jeweils dadurch gekennzeichnet sind, dass sie nicht Pareto-dominiert sind, d. h. dass es keine andere Lösung gibt, welche hinsichtlich einer Eigenschaft günstiger und hinsichtlich keiner der übrigen Eigenschaften ungünstiger wäre. Anders ausgedrückt, eine Lösung, die hinsichtlich mindestens einer Eigenschaft günstiger ist als eine Pareto-optimale Lösung, ist zwangsläufig hinsichtlich mindestens einer anderen Eigenschaft ungünstiger als diese.

Die Zielgrössen der Pareto-optimalen Lösungen bilden gewöhnlich einen Hyperflächenabschnitt im von den Zielgrössen aufgespannten Zielraum, die sogenannte Pareto-Front, welche die Zielmenge, d. h. die Menge der Zielgrössen sämtlicher möglichen Lösungen gegen Bereiche des Zielraums, die günstiger wären, aber nicht zugänglich sind, berandet. An die Pareto-Front schliessen weitere die Zielmenge berandende Hyperflächenabschnitte an, welche Lösungen enthalten, die zwar nicht Pareto-optimal, aber u. U. trotzdem von Interesse sind.

Für die Suche nach Pareto-optimalen Lösungen bieten sich semistochastische Verfahren an, welche sich z. B. am natürlichen Evolutionsprozess der Lebewesen durch Kreuzung, Mutation und Selektion orientieren und mittels sogenannter evolutionärer Algorithmen realisiert werden. Mit Hilfe derselben werden, ausgehend von bestimmten, z. B. zufallsverteilten Ausgangsgrössen für einen Satz von Bestimmungsgrössen iterativ Pareto-optimale Lösungen approximiert, indem bei jedem Iterationsschritt die Bestimmungsgrössen z. B. durch Rekombinationen und Zufallsmutationen variiert und aus den so hergestellten Versuchsgrössen durch auf die entsprechenden Zielgrössen gestützte Auswahl ein neuer Satz von Bestimmungsgrössen selektiert wird. Sobald ein bestimmtes Abbruchskriterium erfüllt ist, wird die Iteration abgebrochen.

In Fig. 4 ist beispielsweise eine Situation dargestellt, in der der Bestimmungsraum 3-dimensional ist mit reellen Parametern x₁, x₂ und x₃. Die Bestimmungsmenge B, über welche die Bestimmungsgrösse variiert, ist dadurch eingeschränkt, dass die Variablen jeweils zwischen Null und einer Obergrenze X₁, X₂ bzw. X₃ liegen und bildet daher einen Quader, das Produkt der Intervalle [0, X₁], [0, X₂] und [0, X₃]. Durch einen bekannten funktionalen Zusammenhang f, der durch ein mathematisches Modell oder durch einen Versuchsaufbau gegeben sein kann, wird jeder Bestimmungsgrösse x= (x₁, x₂, x₃) eine Zielgrösse y=f(x) zugeordnet, die in einer Zielmenge Z liegt. Sie ist eine Teilmenge des in diesem Fall 2-dimensionalen Zielraums, d. h. y=(y₁,y₂), wobei y₁ und y₂ zwei Eigenschaften darstellen, die optimiert werden sollen.

Die Zielmenge Z kann die vollständige Bildmenge der Bestimmungsmenge B unter der Abbildung f oder ein durch Zwangsbedingungen eingeschränkter Teil derselben sein.

Die Zielgrössen der gesuchten Lösungen bilden eine sogenannte Pareto-Front P (durchgezogene Linie), welche die Zielmenge Z gegen kleine, d. h. günstige Werte der Eigenschaften y₁, y₂ hin berandet. Seitlich schliessen an die Pareto-Front P Lösungen an, welche ebenfalls auf dem Rand der Zielmenge Z liegen. Sie sind nicht Pareto-optimal, da zu jeder dieser Lösungen eine Lösung auf der Pareto-Front gefunden werden kann, bei der beide Eigenschaften günstiger sind, doch können sie u. U. ebenfalls von Interesse sein.

Es geht nun in erster Linie darum, Bestimmungsgrössen x zu finden, bei welchen die zugehörigen Zielgrössen y=f(x) möglichst nahe an der Pareto-Front P liegen. Sie sollen ausserdem einigermassen gleichmässig über die gesamte Pareto-Front P und möglichst auch über die an dieselbe anschliessenden Randbereiche der Zielmenge Z verteilt sein. Derartige Lösungen werden mittels eines iterativen evolutionären oder genetischen Algorithmus erzeugt, welcher die Grundlage eines Programms bildet, das auf einer Datenverarbeitungsanlage abläuft. Dabei ist in der Regel jede Variable durch einen Bitvektor einer Länge L, die z. B. 32 beträgt, codiert.

Zur Auffindung annähernd Pareto-optimaler Lösungen werden zuerst in der Bestimmungsmenge B liegende Ausgangsgrössen erzeugt, die als erster Satz von Bestimmungsgrössen den Ausgangspunkt der Iteration bilden. Sie können z. B. regelmässig oder zufällig über die Bestimmungsmenge B verteilt sein. Dann werden so viele Iterationschritte ausgeführt, bis ein Abbruchkriterium erfüllt ist. Es kann darin bestehen, dass eine bestimmte Höchstzahl von Iterationsschritten ausgeführt oder eine bestimmte Rechenzeit verbraucht wurde oder auch darin, dass die Aenderung der Zielgrössen während einer bestimmten Anzahl von Iterationsschritten unterhalb eines bestimmten Minimums geblieben ist.

Bei jedem Iterationschritt werden folgende Teilschritte ausgeführt:

Rekombination: Es werden jeweils durch Kombination von Teilen mehrerer Bestimmungsgrössen aus dem vorliegenden Satz neue Grössen erzeugt. Beispielsweise werden zuerst entweder sämtliche möglichen geordneten Paare von Bestimmungsgrössen gebildet oder auch nur einige mittels eines Zufallsgenerators bestimmte. Jede Bestimmungsgrösse bildet einen Vektor aus n reellen Parametern. Es wird nun ebenfalls mittels eines Zufallsgenerators eine Zahl 1 mit 0≤1≤n erzeugt und dann zwei neue Grössen gebildet, indem die ersten 1 Parameter von der ersten Bestimmungsgrösse und die übrigen von der zweiten Bestimmungsgrösse genommen werden und umgekehrt.

Mutation: Zu den im Rekombinationsschritt erzeugten Grössen werden mittels eines Zufallsgenerators z. B. gemäss einer Normalverteilung erzeugte Grössen addiert. Natürlich können aus einer Grösse auch mehrere Ausgangsgrössen auf solche Weise erzeugt werden.

Selektion: Aus den beiden obengenannten Schritten geht eine Menge von Versuchsgrössen hervor, die in der Regel grösser als der ursprüngliche Satz von Bestimmungsgrössen ist. Aus dieser meist verhältnismässig grossen Menge von Versuchsgrössen wird nun ein neuer Satz von im Durchschnitt besonders günstigen Bestimmungsgrössen ausgewählt. Die Vorgehensweise bei der Selektion ist für die Entwicklung der Iteration von grosser Bedeutung. Zur Steuerung der Annäherung an die Pareto-Front P und an angrenzende Bereiche des Randes der Zielmenge Z, insbesondere zur Erzielung einer breiten Annäherung, wird vorzugsweise wie folgt vorgegangen:

In einem ersten Selektionsschritt wird die durch die Bedingung y₁=0 gekennzeichnete Hyperebene eines Teils des Zielraums, der die Zielmenge Z umfasst und die im dargestellten 2-dimensionalen Fall (Fig. 5a) mit der y₂₋Achse zusammenfällt, einer Partition in Untermengen unterworfen, die in diesem Fall Intervalle I₁ⁱ bilden. Ausgehend davon wird der besagte Teil des Zielraums in Teilmengen W₁ⁱ unterteilt, welche die Urbilder der Orthogonalprojektionen desselben längs der positiven y₁₋Achse auf die besagten Intervalle I₁ⁱ sind. Anders ausgedrückt, die Teilmenge W₁ⁱ für ein bestimmtes i ist die Menge aller Punkte y=(y₁,y₂) im besagten Teil des Zielraums, für die y₁>0 ist und y₂ in I₁ⁱ liegt. In Fig. 5a bildet sie einen zur Koordinatenachse y₁ parallelen Streifen.

Zu jeder der nichtüberlappenden Teilmengen W₁ⁱ wird nun diejenige Versuchsgrösse ermittelt und selektiert, für die y₁ optimal, d. h. minimal ist. In Fig.5a sind die Zielgrössen sämtlicher Versuchsgrössen mit einem Kreis o markiert, die der in den einzelnen W₁ⁱ selektierten Versuchsgrössen sind mit einem überlagerten Malzeichen x gekennzeichnet.

In einem zweiten Selektionsschritt wird der die Zielmenge Z enthaltende Teil des Zielraums auf ganz analoge Weise in Teilmengen W₂^{j} unterteilt und auch dort wieder zu jeder Teilmenge diejenige Versuchsgrösse ermittelt und selektiert, für die y₂ optimal, d. h. minimal ist. Diese Lösungen sind in Fig. 5b mit einem überlagerten Pluszeichen + gekennzeichnet. Der neue Satz von Bestimmungsgrössen, mit denen dann der nächste Iterationsschritt in Angriff genommen wird, setzt sich aus den in beiden Selektionsschritten selektierten Versuchsgrössen zusammen.

In verhältnismässig vielen Fällen, vor allem in der Nähe des mittleren Bereichs der Pareto-Front P sind es die gleichen Versuchsgrössen, die in beiden Fällen ermittelt werden, so dass ein Selektionsschritt gewöhnlich ausreicht, um diese Versuchsgrössen festzustellen. In den seitlichen Randbereichen und vor allem im an die Pareto-Front P anschliessenden Teil des Randes der Zielmenge Z ist dies jedoch in der Regel nicht der Fall. Legt man auch auf die Ermittlung von Lösungen in diesen Bereichen Wert, so ist es erforderlich, beide Selektionsschritte durchzuführen.

Es besteht natürlich auch die Möglichkeit, in jeder der Teilmengen jeweils nicht nur eine Versuchsgrösse, sondern eine Auswahlmenge von Versuchsgrössen zu selektieren, z. B. die k hinsichtlich der verbleibenden Komponente günstigsten mit k>1.

Die geschilderte Vorgehensweise bei der Selektion kann leicht auf Fälle übertragen werden, in denen die Dimension m des Zielraumes grösser als 2 ist. In diesem Fall wird man vorzugsweise sämtliche m Hyperebenen bilden, die dadurch gekennzeichnet sind, dass eine der Koordinaten y₁,...,yₘ gleich Null ist und jeweils eine Partition derselben in Untermengen durchführen. Dies kann so geschehen, dass von vornherein jede der Koordinatenachsen in Intervalle unterteilt und als Untermengen einer Hyperebene dann jeweils sämtliche Produkte von Intervallen herangezogen werden, in welche die die Hyperebene aufspannenden Koordinatenachsen unterteilt sind.

In jeder der Teilmengen, die von den Urbildern der Orthogonalprojektionen auf die Untermengen der Hyperebenen gebildet werden, wird dann die bezüglich der verbleibenden Komponente günstigste Versuchsgrösse selektiert und schliesslich zur Herstellung des neuen Satzes von Bestimmungsgrössen die Vereinigung der selektierten Versuchsgrössen über die Teilmengen und Hyperebenen gebildet. Je nachdem, ob man an einer möglichst umfassenden Ermittlung von Lösungen interessiert ist oder vor allem in bestimmten Bereichen liegende feststellen möchte, kann die Selektion auch nur einen Teil der Hyperebenen berücksichtigen, zumal, wie oben am Beispiel erläutert, die zentralen Bereiche der Pareto-Front meist schon beim ersten Selektionsschritt ziemlich gut erfasst werden.

Die Konkrete durch den Algorithmus bestimmte Vorgehensweise kann natürlich durch andere Zusammenfassung von Einzelschritten etc. vom oben Geschilderten abweichen, insbesondere brauchen nicht unbedingt die beschriebenen Selektionsschritte nacheinander ausgeführt zu werden.

Die Unterteilung in Intervalle kann jeweils gleichmässig oder logarithmisch abgestuft sein, sie kann aber auch etwa in Bereichen, an denen besonderes Interesse besteht, feiner sein. Die Partitionen in Untermengen können während der gesamten Iteration festgehalten oder verändert, z. B. an die Verteilung der Zielgrössen angepasst werden. Statt oder neben Hyperebenen können auch Teilräume niedrigerer Dimension herangezogen werden, doch muss dann in jeder Teilmenge bezüglich mehrerer Eigenschaften optimiert werden, was weitere Vorgaben oder ein rekursives Vorgehen erfordert.

So sind bei der Selektion verschiedenste Abwandlungen des geschilderten Vorgehens denkbar. Die beschriebene Vorgehensweise hat den Vorteil, dass durch die Vorgaben hinsichtlich der Lage der Zielgrössen die Ermittlung der Lösungen jeweils so gesteuert wird, dass sich die aus denselben abgeleiteten Zielgrössen schliesslich auf eine gewünschte Weise über einen Randbereich der Zielmenge verteilen. Selbstverständlich sind auch bei der Rekombination und der Mutation verschiedene Abwandlungen möglich. Diese Teilschritte sind auch nicht in jedem Fall beide erforderlich.

Beim vorliegenden Optimierungsproblem wird der Bestimmungsraum von den reellen Verteilparametern p₁,...,p₇, aufgespannt, welche jeweils über das Intervall [0,1] variieren können. Der Zielraum dagegen wird von den beiden Eigenschaften NOₓ-Gehalt und maximale Amplitude A der auftretenden Pulsationen aufgespannt. Er ist in Fig. 6a, 6b dargestellt, und zwar mit den Zielgrössen der nach 20 Iterationsschritten ermittelten 100 Lösungen (Fig. 6a) und den nach 64 Iterationsschritten ermittelten 320 Lösungen (Fig. 6b). Die beiden Abbildungen zeigen deutlich, wie mehr und mehr vor allem günstige Lösungen ermittelt werden und sich allmählich die Grenze der Menge von Zielgrössen gegen die günstigen Werte der Eigenschaften hin - die Pareto-Front- abzeichnet. Es können natürlich bei verschiedenen Werten des Gesamtmassentroms M Lösungen ermittelt werden, so dass nicht nur für Vollast, sondern für einen grösseren Arbeitsbereich geeignete Bestimmungsgrössen zur Verfügung stehen.

Die Brenneranlage kann dann jeweils in einer Weise betrieben werden, dass Eigenschaften wie NOₓ-Ausstoss und maximale Amplituden auftretender Pulsationen bestimmte Werte, insbesondere solche, die in oder nahe der Pareto-Front liegen, annehmen, indem die zuvor ermittelten Beziehungen zwischen den aus solchen Eigenschaften sich zusammensetzenden Zielgrössen und den aus den Verteilparametern p₁,...,p₇ bestehenden Bestimmungsgrössen benutzt und die Massenströme m₁,...,m₈ aufgrund derselben bei allen Vormischbrennern jeweils so eingestellt werden, dass die Zielgrösse den gewünschten Wert annimmt. Dabei kann nach wechselnden Anforderungen auch zwischen mehreren Einstellungen gewechselt werden. So ist es beispielsweise möglich, bei plötzlich z. B. wegen einer Aenderung der Last eintretenden Verbrennungsfluktuationen und dadurch verursachten Pulsationen kurzzeitig eine Einstellung zu wählen, bei welcher eine stabile pulsationsarme Verbrennung eintritt und dafür vorübergehend höhere NOₓ-Werte in Kauf zu nehmen.

Enthält die Verteilvorrichtung 5 neben den Regelventilen auch, wie in Fig. 1 dargestellt, An/Aus-Ventile, so muss der Bestimmungsraum um entsprechende binäre Schaltparameter ergänzt werden, die jeweils durch ein Bit dargestellt werden, das die Werte 0 für 'geschlossen' und 1 für 'offen' annehmen kann. Das Auftreten dieser Parameter ändert am weiter oben geschilderten Ablauf der Optimierung praktisch nichts. Lediglich bei der Mutation ist eine Aenderung erforderlich. Hier kann z. B. vorgesehen werden, dass jeder Schaltparameter, also jedes Bit, mit einer bestimmten, z. B. festen Wahrscheinlichkeit invertiert wird, also 0 in 1 und 1 in 0 übergeht.

Bei einer vollständigen Brenneranlage sind die Verteilvorrichtungen in der Regel zur Begrenzung des Aufwands und der Ausfallswahrscheinlichkeit einfacher aufgebaut als die bei der Optimierung benützte. Nach Auffindung der günstigsten Bestimmungsgrössen mittels der verhältnismässig komplexen Verteilvorrichtung 5 der Versuchsanordnung können dann gezielt vereinfachte Verteilvorrichtungen für die Brenneranlage entworfen werden, mit denen vor allem die in Frage kommenden Massenstromverteilungen eingestellt werden können.

Fig. 7 zeigt als Beispiele fünf verschiedene bei Volllast ermittelte Lösungen, d. h. Massenstromverteilungen, wobei die Abszisse die Nummern der Regelventile V₁,...,V₈ zeigt und die Ordinate die Massenströme m₁,...,m₈. Die damit erzielten Eigenschaften sind der folgenden Tabelle zu entnehmen:

| Lösung | Zeichen | NOₓ-Gehalt | maximale Amplitude |
|---|---|---|---|
| | | [ppm] | [mbar] |
| 1 (Gleichverteilung) | Kreise | 2,5 | 3,12 |
| 2 | Raute | 3,0 | 2,92 |
| 3 | Dreieck | 4,0 | 2,83 |
| 4 | Kreuz | 5,0 | 2,80 |
| 5 | Quadrat | 2,0 | 3,37 |

Lösungen 3 und 4 bieten besonders günstige Werte, was die auftretenden Druckstösse betrifft, während Lösung 5 die besten Abgaswerte zeigt, allerdings mit hohen Werten für die Druckmaxima. Lösung 2 dagegen bietet in dieser Beziehung wieder sehr gute Eigenschaften, für welche lediglich ein geringfügig erhöhter NOₓ-Ausstoss in Kauf genommen werden muss.

Es sind natürlich verschiedene Abweichungen vom beschriebenen Beispiel möglich. So können zusätzliche Eigenschaften oder andere als die beschriebenen wie z. B. CO-Ausstoss, mittlere Amplitude des erzeugten Schalls u. a. der Optimierung zugrundegelegt werden. Auch die Optimierungsmethode kann vom Beschriebenen abweichen.

### Bezugszeichenliste

- 1: Vormischbrenner
- 2: Oeffnung
- 3a,b: Lufteinlassschlitze
- 4: Eintrittsöffnungen
- 5: Verteilvorrichtung
- 6: Hauptleitung
- 7: Eingangsventil
- 8: Zweigleitungen
- 9: Datenverarbeitungsanlage
- 10: Steuereinheit
- 11: Messeinheit

## Patentansprüche

1. Verfahren zur Optimierung des Betriebes einer Brenneranlage mit einer Brennstoffquelle, einer mit der Brennstoffquelle verbundenen Zuleitung (6) und mindestens einem drallstabilisierten Vormischbrenner (1), sowie mit einer Verteilvorrichtung (5'), über welche mehrere Eintrittsöffnungen (4) im Vormischbrenner (1) mit der Zuleitung (6) verbunden sind und welche ein zwischen derselben und den Eintrittsöffnungen (4) des Vormischbrenners (5) liegendes System von Ventilen oder Drosseln zur Einstellung der Massenstromverteilung auf die Eintrittsöffnungen (4) umfasst, wobei nach einer Bestimmungsgrösse, einem Vektor aus einer Bestimmungsmenge, welche eine Teilmenge eines n-dimensionalen Raums ist, mittels der Ventile oder Drosseln die Massenstromverteilung so eingestellt wird, dass eine Zielgrösse, ein Vektor aus einer Zielmenge, welche eine Teilmenge eines m-dimensionalen Raums ist, einen bestimmten Wert annimmt, **dadurch gekennzeichnet, dass** die Bestimmungsgrösse aus einem Satz von vorgängig in einer Versuchsanordnung ermittelten Bestimmungsgrössen stammt, in der Massenstromverteilungen gemäss Bestimmungsgrössen aus einer grösseren Menge eingestellt wurden und die Ermittlung des Satzes von Bestimmungsgrössen gemäss den dabei von den Zielgrössen angenommenen Werten vorgenommen wurde, derart, dass die ermittelte Bestimmungsgrösse jeweils mindestens annähernd einer Pareto-Lösunglentspricht, welche sich **dadurch** auszeichnet, dass bei jeder Lösung, bei welcher eine Komponente der Zielgrösse einen günstigeren Wert aufweist, zwangsläufig mindestens eine andere Komponente einen ungünstigeren Wert aufweist.

2. Verfahren nach Anspruch 1, **dadurch gekennzeichnet, dass** je nach Betriebsweise oder Anforderung an die Zielgrösse oder beidem eine geeignete unter mehreren vorgängig ermittelten Bestimmungsgrössen ausgewählt und der Einstellung der Massenstromverteilung zugrundegelegt wird.

3. Verfahren nach Anspruch 1 oder 2, **dadurch gekennzeichnet, dass** die Komponenten der Bestimmungsgrösse den Massenströmen zu Eintrittsöffnungen oder Gruppen von Eintrittsöffnungen (4) des mindestens einen vormischbrenners (1) entsprechen oder Grössen, aus denen dieselben unmittelbar ableitbar sind.

4. Verfahren nach einem der Ansprüche 1 bis 3, **dadurch gekennzeichnet, dass** die Konzentration mindestens eines Schadstoffes, z. B. die NOₓ-Konzentration im Abgas eine Komponente der Zielgrösse bildet.

5. Verfahren nach einem der Ansprüche 1 bis 4, **dadurch gekennzeichnet, dass** ein Mass der in der Brenneranlage auftretenden Pulsationen, vorzugsweise deren maximale Amplitude eine Komponente der Zielgrösse bildet.

## Claims

1. Method for optimizing the operation of a burner system with a fuel source, a feed line (6) connected to the fuel source, and at least one swirl-stabilized premix burner (1), and also a distributing device (5'), by means of which a number of inlet openings (4) in the premix burner (1) are connected to the feed line (6) and which comprises a system of valves or restrictors, lying between the feed line (6) and the inlet openings (4) of the premix burner (5), for setting the mass flow distribution between the inlet openings (4), where, on the basis of a determination variable, a vector from a determination set which is a subset of an n-dimensional domain, the mass flow distribution is set by means of the valves or restrictors in such a way that a target variable, a vector from a target set which is a subset of an m-dimensional domain, assumes a specific value, **characterized in that** the determination variable comes from a set of determination variables previously determined in a test setup, in which mass flow distributions have been set in accordance with determination variables from a larger set and the determination of the set of determination variables has been carried out in accordance with the values assumed therein by the target variables, in such a way that the determined determination variable in each case corresponds at least approximately to a Pareto solution, which is distinguished by the fact that in every solution in which one component of the target variable has a more favorable value, at least one other component inevitably has a less favorable value.

2. Method according to claim 1, **characterized in that**, depending on the mode of operation or requirement for the target variable or both, a suitable determination variable is selected from a number of previously determined determination variables and is taken as a basis for setting the mass flow distribution.

3. Method according to claim 1 or 2, **characterized in that** the components of the determination variable correspond to the mass flows to inlet openings or groups of inlet openings (4) of the at least one premix burner (1), or are variables from which the same can be directly derived.

4. Method according to one of claims 1 to 3, **characterized in that** the concentration of at least one pollutant, for example the NOₓ concentration, in the exhaust gas forms a component of the target variable.

5. Method according to one of claims 1 to 4, **characterized in that** a measure of the pulsations occurring in the burner system, preferably their maximum amplitude, forms a component of the target variable.

## Revendications

1. Procédé pour optimiser le fonctionnement d'une installation de brûleur comprenant une source de combustible, une conduite d'alimentation (6) connectée à la source de combustible et au moins un brûleur à prémélange (1) à tourbillonnement stabilisé, ainsi qu'un dispositif de distribution (5'), par le biais duquel plusieurs ouvertures d'entrée (4) dans le brûleur à prémélange (1) sont connectées à la conduite d'alimentation (6) et comprenant un système de soupapes ou de papillons pour ajuster la distribution du débit massique aux ouvertures d'entrée (4), situé entre ce même dispositif de distribution et les ouvertures d'entrée (4) du brûleur à prémélange (1), où, en fonction d'une valeur de détermination, d'un vecteur issu d'une quantité de détermination, qui est une quantité partielle d'un espace à n dimensions, on ajuste au moyen des soupapes ou des papillons la répartition du débit massique de telle sorte qu'une valeur cible, un vecteur issu d'une quantité cible, qui est une quantité partielle d'un espace à m dimensions, adopte une valeur déterminée,
**caractérisé en ce que** la valeur de détermination provient d'un jeu de valeurs de détermination détectées préalablement dans un système d'essai, dans lequel des répartitions du débit massique selon des valeurs de détermination ont été ajustées en fonction des valeurs adoptées dans ce cas par les valeurs cibles, de telle sorte que la valeur de détermination détectée corresponde à chaque fois au moins approximativement à une solution Pareto, qui se **caractérise en ce que** pour chaque solution, pour laquelle une composante de la valeur cible présente une valeur plus favorable, au moins une autre composante présente forcément une valeur moins favorable.

2. Procédé selon la revendication 1, **caractérisé en ce qu'**en fonction du mode de fonctionnement ou de l'exigence en matière de valeur cible ou les deux, on choisit une valeur de détermination appropriée parmi plusieurs valeurs de détermination détectées préalablement et on la prend pour base pour l'ajustement de la répartition du débit massique.

3. Procédé selon la revendication 1 ou 2, **caractérisé en ce que** les composantes de la valeur de détermination correspondent aux débits massiques vers les ouvertures d'entrée ou des groupes d'ouvertures d'entrée (4) de l'au moins un brûleur à prémélange (1) ou à des valeurs desquelles on peut déduire directement celles-ci.

4. Procédé selon l'une quelconque des revendications 1 à 3, **caractérisé en ce que** la concentration en au moins une substance toxique, par exemple la concentration en NOₓ dans le gaz d'échappement, constitue une composante de la valeur cible.

5. Procédé selon l'une quelconque des revendications 1 à 4, **caractérisé en ce qu'**une mesure des pulsations se produisant dans l'installation de brûleur, de préférence leur amplitude maximale, constitue une composante de la valeur cible.
